Europäisches Patentamt

European Patent Office

Office européen des brevets

(11) Veröffentlichungsnummer: **0 483 649 A2**

# (12) EUROPÄISCHE PATENTANMELDUNG

(21) Anmeldenummer: **91118021.4**

(22) Anmeldetag: **23.10.91**

(51) Int. Cl.5: **B60D 1/62**

(30) Priorität: **27.10.90 DE 4034201**

(43) Veröffentlichungstag der Anmeldung:
**06.05.92 Patentblatt 92/19**

(84) Benannte Vertragsstaaten:
**BE DE FR GB IT NL**

(71) Anmelder: **Gebhard, Dietrich
Erfurter Strasse 8
W-7502 Malsch 1(DE)**

(72) Erfinder: **Wendel, Wolfgang
Jägerhausstrasse 14 a
W-7500 Karlsruhe 1(DE)**

(74) Vertreter: **Witte, Alexander, Dr.-Ing. et al
Witte, Weller & Gahlert Patent- und
Rechtsanwälte Augustenstrasse 7
W-7000 Stuttgart 1(DE)**

(54) **Steckdose für eine Steckverbindung für den elektrischen Anschluss von Kraftfahrzeuganhängern.**

(57) Ein Steckdose (10) ist für eine Steckverbindung für den elektrischen Anschluß von Kraftfahrzeuganhängern vorgesehen. Sie verfügt über eine Bajonettfassung (23) für einen zugehörigen Stecker (21), bei der auf einer zylindrischen Innenwand (24) eines Führungszylinders (20) der Steckdose (10) radiale Vorsprünge (25a, 25b, 25c) über einen Umfang verteilt angeordnet sind. Mindestens einer der Vorsprünge (25a, 25b) ist radial federnd ausgebildet.

EP 0 483 649 A2

Die Erfindung betrifft eine Steckdose für eine Steckverbindung für den elektrischen Anschluß von Kraftfahrzeuganhängern mit einer Bajonettfassung für einen zugehörigen Stecker, bei der auf einer zylindrischen Innenwand eines Führungszylinders der Steckdose radiale Vorsprünge über einen Umfang verteilt angeordnet sind.

Eine Steckdose der vorstehend genannten Art ist aus der DE-OS 39 41 006 bekannt.

Bei der bekannten Steckdose ist der Führungszylinder insgesamt starr in der Steckdose eingebaut bzw. mit dem Steckdosengehäuse einstückig und radial gelagert.

Dies führt zwar zu einer reproduzierbaren und sicheren Halterung für einen eingeführten Stecker, der Stecker kann aber aus der Steckdose nur durch exaktes Herausdrehen, z.B. einer Hülse, aus der Bajonettfassung wieder entfernt werden.

Andererseits ist man bestrebt, bei Steckdosen der eingangs genannten Art Sicherheitsvorkehrungen zu treffen, die gewährleisten, daß ein Stecker bei Überschreiten eines relativ hohen Grenzwertes einer Zugkraft aus der Steckdose gewaltsam herausgezogen werden kann, ohne aus der Bajonettfassung herausgedreht worden zu sein. Dieses gewaltsame Herausziehen aus der Steckdose soll möglichst ohne Beschädigung der Steckdose geschehen können. Auf diese Weise soll erreicht werden, daß eine Beschädigung von Stecker und/oder Steckdose vermieden wird, wenn z.B. beim Abkoppeln eines Anhängers nach dem Trennen der mechanischen Kopplungselemente vergessen wurde, den Stecker aus der Steckdose herauszuziehen. Wenn dann das Zugfahrzeug bei abgestelltem und gebremstem Anhänger abfährt, wird die elektrische Steckverbindung gewaltsam getrennt, was bei herkömmlichen Steckverbindungen bei einer Zugkraft von z.B. ca. 1.000 N zu einer Beschädigung oder gar Zerstörung der Steckverbindung führen kann. Insbesondere können bei starren Führungszylindern in den Steckdosen die radialen Vorsprünge der Bajonettfassung abgeschert oder die zugehörigen Führungsnuten des Steckers ausgebrochen werden.

Der Erfindung liegt die Aufgabe zugrunde, eine Steckdose der eingangs genannten Art dahingehend weiterzubilden, daß im Notfall der Stecker mit einer sehr großen Zugkraft von z.B. ca. 500 N auch ohne Verdrehung in der Bajonettfassung durch lediglich axialen Zug aus der Steckdose herausgezogen werden kann, ohne daß die Steckverbindung dabei beschädigt wird.

Diese Aufgabe wird erfindungsgemäß dadurch gelöst, daß mindestens eine der Vorsprünge radial fluchtend federnd ausgebildet ist.

Die der Erfindung zugrundeliegende Aufgabe wird auf diese Weise vollkommen gelöst. Dadurch, daß die Vorsprünge in definierter Weise radial federnd ausgebildet sind, kann man die Federdraft so einstellen, daß die Vorsprünge beim Überschreiten einer definierten axialen Zugkraft von z.B. 500 N am Stecker radial ausweichen und den Weg für den Stecker aus der Bajonettfassung freigeben, ohne daß der Stecker in der Bajonettfassung gedreht werden muß. Da für die radial federnde Ausbildung der Vorsprünge eine Fülle konstruktiver Möglichkeiten zur Verfügung steht, kann man auch nahezu beliebige Grenz-Zugkräfte vorgeben, bei denen diese Sicherheitsvorkehrung wirksam wird.

Bei einer bevorzugten Ausgestaltung der Erfindung sind drei Vorsprünge um 120° über den Umfang versetzt vorgesehen, wie dies an sich bekannt ist, von den drei Vorsprüngen sind jedoch zwei radial federnd ausgebildet.

Diese Maßnahme hat den Vorteil, daß beim radialen Ausweichen zweier von drei Vorsprüngen der Stecker abgezogen werden kann, weil der verbleibende starre dritte Vorsprung ein Herausziehen des Steckers nicht zu verhindern vermag, andererseits wird auf diese Weise der konstruktive Aufwand auf das Minimum beschränkt und der eine starre Vorsprung gewährleistet im normalen Betrieb einen zuverlässigen Sitz des Steckers in der Steckdose.

Bei einer weiteren besonders bevorzugten Ausgestaltung der Erfindung ist der Führungszylinder in der axialen Position der Vorsprünge in mindestens einem Umfangsbereich von einer Radialwand radial abgestützt, während der Führungszylinder in mindestens einem zweiten Umfangsbereich radial freisteht. Der Führungszylinder besteht ferner aus einem elastischen Material, und der mindestens eine radial federnd ausgebildete Vorsprung ist in dem mindestens einen zweiten Umfangsbereich angeordnet.

Diese Maßnahme hat den Vorteil, daß ein extrem einfacher Aufbau entsteht, weil der Führungszylinder durch das Vorsehen von Taschen in der Radialwand bereichsweise radial federnd gestaltet wird, sofern er aus einem elastischen Material besteht. Auf diese Weise kann die gesamte Anordnung einstückig und damit leicht herstellbar ausgebildet werden. Ferner braucht das seitherige Konzept von Steckdosen der gattungsgemäßen Art nicht wesentlich verändert zu werden, so daß auch bereits vorhandene Konstruktionen leicht abgeändert werden können, um die erfindungsgemäße Sicherheitsvorrichtung zu enthalten.

Bei einer bevorzugten Ausführungsform der Erfindung wird der radiale Freistand über Taschen in der Radialwand erzielt. Um ein Zusetzen der Taschen mit Schmutz zu verhindern, werden diese bevorzugt mit einem elastischen Werkstoff ausgefüllt.

Weitere Vorteile ergeben sich aus der Beschreibung und der beigefügten Zeichnung.

Es versteht sich, daß die vorstehend genannten und die nachstehend noch zu erläuternden Merkmale nicht nur in den jeweils angegebenen Kombination, sondern auch in anderen Kombinationen oder in Alleinstellung verwendbar sind, ohne den Rahmen der vorliegenden Erfindung zu verlassen.

Ein Ausführungsbeispiel der Erfindung ist in der Zeichnung dargestellt und wird in der nachfolgenden Beschreibung näher erläutert. Es zeigen:

Fig. 1    ein Ausführungsbeispiel einer erfindungsgemäßen Steckdose in Seitenansicht, und zwar in einer Schnittdarstellung entlang der Linie I - I von Fig. 2;

Fig. 2    eine Draufsicht auf die Steckdose der Fig. 1, teilweise aufgebrochen.

In den Figuren bezeichnet 10 insgesamt eine an sich bekannte Steckdose für eine Steckverbindung für den elektrischen Anschluß von Kraftfahrzeuganhängern an einem Zugfahrzeug. Die Steckdose 10 ist mit einem äußerlich herkömmlichen Dosengehäuse 11 versehen, in dem bspw. drei um 120° über den Umfang versetzte Bohrungen 12a, 12b, 12c für Befestigungsschrauben vorgesehen sind, mit denen die Steckdose 10 an einem Zugfahrzeug befestigt werden kann.

Innerhalb der Steckdose 10 befindet sich ein axial ausgerichteter Führungszylinder 20, in den im Betrieb ein nur strichpunktiert angedeuteter Stecker 21 eingesteckt werden kann. Der Stecker 21 ist an einem losen Kabelende eines Kabels befestigt, das seinerseits zum Hänger gehört.

Die mechanische Verbindung zwischen Stecker 21 und Steckdose 10 erfolgt über eine Bajonettfassung, die in den Figuren insgesamt mit 23 angedeutet ist. An der Steckdose 10 umfaßt die Bajonettfassung 23 im wesentlichen eine zylindrische Innenwand 24 des Führungszylinders 20 und dort drei über einen Umfang um jeweils 120° versetzte Vorsprünge 25a, 25b, 25c. Die Vorsprünge 25a bis 25c greifen beim Einstecken des Steckers 21 in entsprechende abgewinkelte Führungsnuten des Steckers 21 ein, wie dies an sich bekannt ist und hier nicht näher erläutert zu werden braucht.

Von den drei Vorsprüngen 25a, 25b, 25c sind zwei, nämlich die Vorsprünge 25a und 25b, radial federnd ausgebildet, während der dritte Vorsprung 25c starr angeordnet ist.

Um dieses zu erreichen, ist der Führungszylinder 20 als zylindrisches Rohr 26 ausgebildet, das bereichsweise radial starr und bereichsweise radial elastisch ist. Hierzu ist das zylindrische Rohr 26 in der axialen Höhe der Vorsprünge 25a bis 25c von einer umlaufenden Radialwand 27 umgeben, die zugleich die Verbindung zum äußeren Dosengehäuse 11 darstellt.

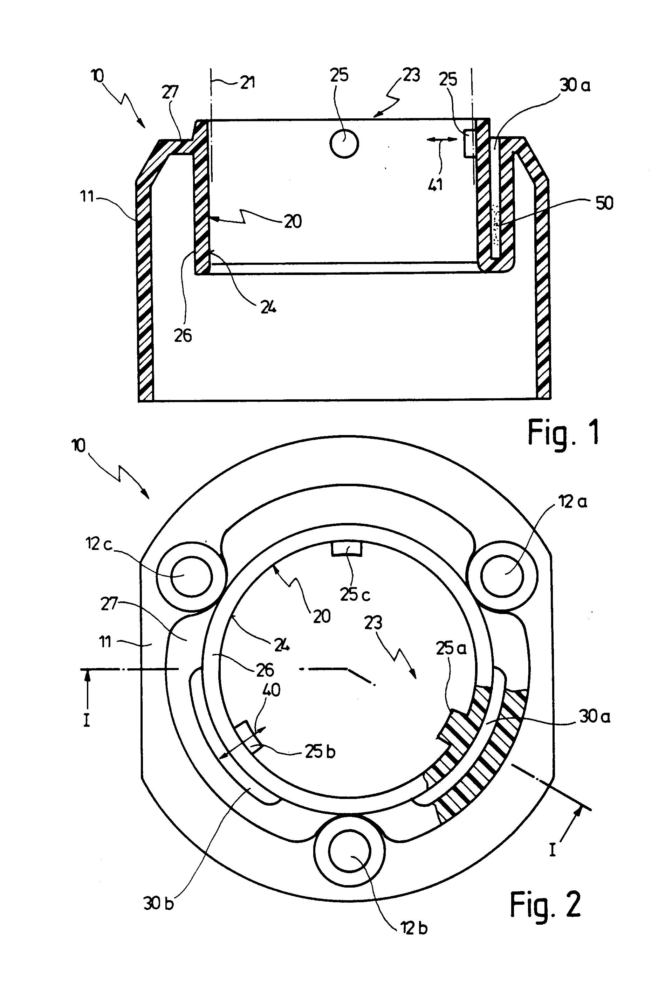

Wie deutlich aus der Draufsicht der Fig. 2 zu erkennen ist, weist die Radialwand 27 in einem gewissen Umfangsbereich um die Vorsprünge 25a und 25b herum Taschen 30a, 30b auf, die in axialer Richtung etwa über die Hälfte der Höhe der Steckdose 10 durchgehen und in Umfangsrichtung einen Winkelbereich von etwa 60° überstreichen.

Durch diese Anordnung ist das zylindrische Rohr 26 im Bereich der Taschen 30a und 30b radial nachgiebig, sofern es aus einem elastischen Material besteht. Wenn man also das zylindrische Rohr 26 aus einem geeigneten Kunststoff herstellt, insbesondere das gesamte Dosengehäuse 11 mit zylindrischem Rohr 26 und Radialwand 27 einstückig aus einem elastischen Kunststoff spritzt, kann dieser Effekt eingestellt werden. Dann können nämlich die Vorsprünge 25a und 25b geringfügig radial in die Taschen 30 hinein ausweichen, wie in Fig. 1 und 2 mit Pfeilen 40 und 41 angedeutet. Der dritte Vorsprung 25c ist indessen radial starr, weil er sich auf seiner Rückseite unmittelbar an die dort durchgehende Radialwand 27 abstützt.

Wird nun ein in die Steckdose 10 eingesteckter Stecker 21, dessen Hülse vollständig in die Bajonettfassung 23 eingedreht ist, mit einer hohen Axialkraft beaufschlagt, insbesondere also einer hohen Zugkraft im Kabelende, so führt dies bei überschreiten eines bestimmten Grenzwertes der Zugkraft von z.B. 500 N dazu, daß die Vorsprünge 25a und 25b radial nach außen in die Taschen 30a und 30b ausweichen und damit den Weg für den Stecker 21 freigeben, ohne daß dieser korrekt aus der Bajonettfassung 23 herausgedreht worden wäre.

Es versteht sich, daß die hierzu erforderliche Zugkraft auf mannigfaltige Weise eingestellt werden kann, bspw. durch eine Materialauswahl bzw. die Elastizität des Werkstoffes des zylindrischen Rohrs 26, durch dessen Abmessung, durch die axiale Länge der Taschen 30, durch eine Ausziehhilfe in Gestalt einer Anschrägung der Vorsprünge 25a und 25b und dgl. mehr.

Die Taschen 30a, 30b können mit einem Werkstoff 50 ausgefüllt sein. Dadurch wird ein Zusetzen der Taschen 30a, 30b mit Schmutz vermieden und es kann die Federcharakteristik der elastischen Vorsprünge 25a, 25b über die Elastizität des Werkstoffs 50 eingestellt werden. Statt eines Werkstoffs 50, z.B. eines Schaums, kann auch ein geeigneter Einsatz verwendet werden.

**Patentansprüche**

1.    Steckose für eine Steckverbindung für den elektrischen Anschluß von Kraftfahrzeuganhängern mit einer Bajonettfassung (23) für einen zugehörigen Stecker (21), bei der auf einer zylindrischen Innenwand (24) eines Führungszylinders (20) der Steckdose (10) radiale Vorsprünge (25a, 25b, 25c) über einen Umfang verteilt angeordnet sind, dadurch gekennzeichnet, daß mindestens einer der Vorsprünge (25a, 25b) radial federnd ausgebildet ist.

2. Steckdose nach Anspruch 1, dadurch gekennzeichnet, daß drei Vorsprünge (25a, 25b) um 120° über den Umfang versetzt vorgesehen sind, von denen zwei radial federnd ausgebildet sind.

3. Steckdose nach Anspruch 1 oder 2, dadurch gekennzeichnet, daß der Führungszylinder (20) in der axialen Position der Vorsprünge (25a, 25b, 25c) in mindestens einem Umfangsbereich von einer Radialwand (27) radial abgestützt ist, während der Führungszylinder (20) in mindestens einem zweiten Umfangsbereich radial freisteht, daß der Führungszylinder (10) aus einem elastischen Material besteht, und daß der mindestens eine radial federnd ausgebildete Vorsprung (25a, 25b) in dem mindestens einen zweiten Umfangsbereich angeordnet ist.

4. Steckdose nach Anspruch 3, dadurch gekennzeichnet, daß in dem mindestens einen zweiten Umfangsbereich Taschen (30) in der Radialwand (27) ausgebildet sind.

5. Steckdose nach Anspruch 4, dadurch gekennzeichnet, daß die Taschen (30) mit einem elastischen Werkstoff (50) ausgefüllt sind.

Fig. 1

Fig. 2